# EUROPÄISCHE PATENTSCHRIFT

(11) **EP 0 591 717 B1**
(45) Veröffentlichungstag und Bekanntmachung des Hinweises auf die Patenterteilung: **18.12.1996**
(21) Anmeldenummer: 93114789.6
(22) Anmeldetag: 15.09.1993
(51) Int. Cl.: B62D 21/15, B60R 19/56, B62D 21/02

(54) **Nutzfahrzeug, insbesondere Frontlenker-Lastkraftwagen**
Commercial vehicle, especially a cab over engine lorry
Véhicule utilitaire, notamment un camion à cabine avancée

(30) Priorität: 09.10.1992 DE 4234092
(43) Veröffentlichungstag der Anmeldung: 13.04.1994
(73) Patentinhaber: MAN Nutzfahrzeuge Aktiengesellschaft, 80976 München (DE)
(72) Erfinder: Rieck, Gerhard, Dipl.-Ing., D-81247 München (DE); Mertens, Armin, D-80993 München (DE); Schmolly, Ingo, Dipl.-Ing. (FH), D-85757 Karlsfeld (DE)

(56) Entgegenhaltungen:
- DE-A- 3 151 280
- DE-A- 3 312 446
- DE-A- 4 112 372
- DE-B- 1 077 992
- DE-C- 929 052
- DE-U- 9 205 423
- FR-A- 659 850
- FR-A- 2 214 281
- FR-A- 2 667 839

## Beschreibung

Die Erfindung betrifft einen Lastkraftwagen, insbesondere der Frontlenker-Bauart zur Bildung eines Nutzfahrzeuges, mit Merkmalen der im Oberbegriff des Anspruchs 1 angegebenen Art.

Lastkraftwagen weisen unabhängig von ihrer Bauart ein Fahrgestell auf, dessen Rahmen aus zwei mit ihrer Oberkante in einer horizontalen Ebene liegenden Längsträgern besteht, die über mehrere Querträger verbunden sind. Dabei haben die Rahmen-Längsträger eine Querschnitts-Höhe, die je nach zulässigem Gesamtgewicht des Lastkraftwagens bis zu 400 mm betragen kann. Bedingt dadurch ist für die Herstellung dieser Rahmen-Längsträger relativ viel Material notwendig. Außerdem tragen diese in der Regel auseinteiligen Blechpreßteilen bestehenden Rahmen-Längsträger in ganz erheblichem Maße zum Leergewicht des Lastkraftwagens bei. Aufgrund der Festigkeit des Materiales, des Querschnittes der Rahmen-Längsträger und der diese verbindenden Querträger ergibt sich eine bestimmte Biegesteifigkeit des Rahmens. Eine erforderliche Rahmen-Biegesteifigkeit kann daher nur durch eine entsprechende Auslegung dieser Komponenten erzielt werden. Darüberhinaus ist es Vorschrift, Lastkraftwagen auch mit seitlichen Unterfahrschutzorganen auszustatten. Hierzu sind die verschiedensten Lösungen bekannt.

Aus dem gattungsbildenden Dokument DE 41 12 372 A1 geht ein Unterfahrschutz für einen Lkw hervor, bei dem die Unterfahrschutzschilde je Fahrzeugseite über stabförmige, durch Rohre oder Profilstäbe gebildete Halter getragen an einem Rahmen-Längsträger abgestützt sind. Dabei können die Unterfahrschutzschilde je Seite durch großflächige Seitenplatten oder mehrere übereinander angeordnete Schutzplanken realisiert sein. Zwischen Halter und Unterfahrschutzschild kann ein gummielastisches Organ gegeben sein, das aber nicht als Energieabsorber bezeichnet werden kann und wegen der Gummielastizität nach Zusammenpressung bei Expandierung eine unerwünschte Katapultwirkung verursacht. Unabhängig davon besteht jedoch generell, so auch bei dieser bekannten Lösung das Problem, daß die Halterungen wegen der relativ hohen Anlenkung an einem Längsträger nur eine begrenzte Stabilität aufweisen und meist nicht in der Lage sind, den Seitenaufprall eines Pkw wirksam abzufangen.

Es ist daher Aufgabe der Erfindung, bei einem Lastkraftwagen der eingangs genannten Art dessen Rahmen dahingehend abzuändern, daß die erforderliche Biegesteifigkeit desselben mit geringerem Gewicht und Materialeinsatz und außerdem eine für das Abfangen eines seitlich aufprallenden Fahrzeugs günstigere Befestigung der seitlichen Unterfahrschutzschilde realisierbar ist.

Diese Aufgabe ist erfindungsgemäß bei einem Lastkraftwagen der gattungsgemäßen Art durch die im Kennzeichen des Anspruchs 1 angegebenen Merkmale gelöst.

Vorteilhafte Ausgestaltungen dieser Lösung sind in den Unteransprüchen angegeben.

Bedingt durch die erfindungsgemäße Auflösung jedes der beiden Rahmen-Längsträger hinter dem Fahrerhaus in ein oberes und ein unteres Längsträger-Teil ist somit in Verbindung mit den jeweiligen Querträgern ein Rahmenmittelabschnitt darstellbar, mit dem Ergebnis einer sehr hohen Biegesteifigkeit bei gleichzeitig geringerem Gewicht und relativ geringem Materialeinsatz. Die erfindungsgemäße Längsträgeraufteilung kommt mithin nur in jenem Bereich des Nutzfahrzeuges zur Anwendung, der naturgemäß wegen der An- und Aufbauten und Beladung am stärksten belastet ist. Rahmenbereiche hinter der/den Hinterachse(n) und vor dem Auflösungsbereich unter dem Fahrerhaus erfordern regelmäßig keine solch hohe Biegesteifigkeit und können daher entsprechend leichter, mit weniger Materialeinsatz und konstruktiv günstiger gestaltet werden. Außerdem erlaubt die erfindungsgemäße Rahmen-Konstruktion eine erheblich günstigere Abstützung der seitlichen Unterfahrschutzschilde, weil die Halter an einer entsprechend weiten Basis - oben und unten - abgestützt sowie nun auch konstruktiv günstiger als bisher für einen wirksamen Unterfahrschutz mit energieverzehrenden Organen ausbildbar sind.

Nachstehend ist die erfindungsgemäße Lösung anhand mehrerer in der Zeichnung dargestellter Ausführungsbeispiele noch näher erläutert. In der Zeichnung zeigen:
- Fig. 1,2,3: jeweils in schematisierter Seitenansicht einen Lastkraftwagen der Frontlenker-Bauart (ohne Auf- und Anbauten) mit einer Ausführungsform der erfindungsgemäßen Rahmen-Konstruktion,
- Fig. 4: eine Draufsicht auf den Heckbereich des Fahrzeuges gemäß Fig. 2 und 3,
- Fig. 5 bis 8: je eine Ausführungsform der Querträger-Verbindungen zwischen den beiden erfindungsgemäß in zwei Teile aufgelösten Längsträger-Abschnitten,
- Fig. 9 bis 11: je eine erfindungsgemäße Ausführungsform für den Anschluß von Organen für einen seitlichen Unterfahrschutz am zweigeteilten Längsträger-Abschnitt.

In den Figuren sind gleiche bzw. einander entsprechende Bauteile mit gleichen Bezugszeichen angezogen.

Bei einem Lastkraftwagen kann es sich um einen Lastkraftwagen jeglicher Bau- und Einsatzart handeln Die Basis bildet somit ein Lastkraftwagen der Frontlenker- oder Hauber-Bauart, auf dessen Fahrgestell je nach Einsatzzweck die entsprechenden Auf- und oder Anbauten angebracht sind.

Der Lastkraftwagen weist ein Fahrgestell auf, dessen Rahmen 1 aus zwei bauartgleichen, über Querträger miteinander verbundenen Längsträgern 2, 3 besteht. Vom Rahmen 1 werden in dessen vorderem Bereich ein Antriebsaggregat 4 - eingebaut zwischen beiden Längsträgern 2, 3 - und ein Fahrerhaus 5 - letzteres über Lagerböcke 6, 7 - getragen.

Dem erfindungsgemäßen Rahmen-Konzept entsprechend ist jeder der beiden Rahmen-Längsträger 2, 3 etwa ab der Fahrerhaus-Rückwand 8 in ein oberes Längsträger-Teil 2/1, 3/1 und ein davon beabstandetes unteres Längsträger-Teil 2/2, 3/2 aufgelöst, die vor der (ersten, vorderen) Hinterachse 9 wieder miteinander verbunden sind.

Nachfolgend sind die verschiedenen Ausführungsmöglichkeiten dieses erfindungsgemäßen Rahmen-Konzeptes anhand der einzelnen Figuren näher erläutert.

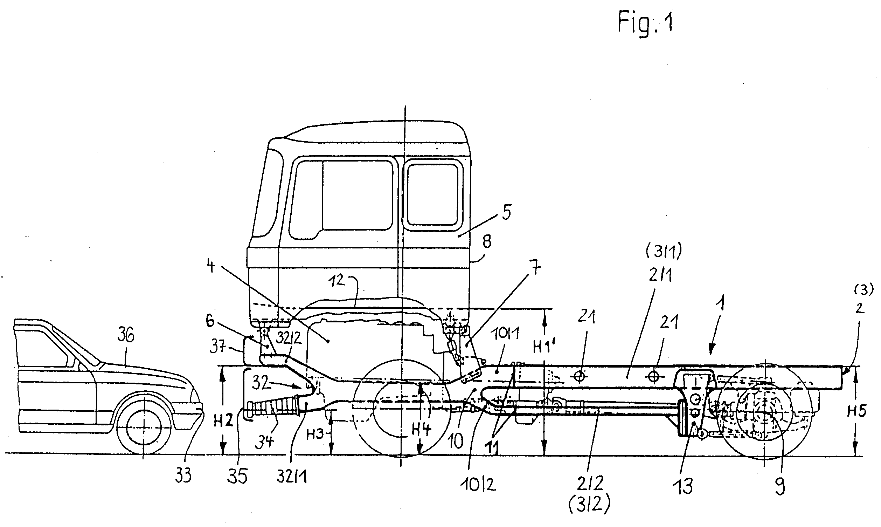

In den dargestellten Ausführungsformen gemäß Fig. 1 bis 3 weist jeder der beiden Rahmen-Längsträger 2, 3 am hinteren Ende eines vorderen Träger-Abschnittes 2/3 bzw. 3/3 eine Vertikal-Gabelung 10 mit oberem Gabel-Teil 10/1, an dem sich das obere Längsträger-Teil 2/1 bzw. 3/1 anschließt, und unterem Gabel-Teil 10/2, an dem sich das untere Längsträger-Teil 2/2 bzw. 3/2 anschließt, auf. Der vordere Längsträger-Abschnitt 2/3 bzw. 3/3 jedes Längsträgers 2, 3 ist dabei um ein gewisses Maß zumindest partiell abgesenkt, um eine Tieferlegung des Antriebsaggregates 4 und gegebenenfalls auch des Fahrerhauses 5 zu ermöglichen. Zum Vergleich: Das Maß des Abstandes zwischen Fahrbahn und Oberkante oberes Längsträger-Teil 2/1 bzw. 3/1 ist in der Zeichnung mit H5 angegeben. Demgegenüber ist das Maß zwischen Fahrbahn und Oberkante des abgesenkten vorderen Träger-Abschnittes 2/3 bzw. 3/3, welches in der Zeichnung mit H4 angegeben ist, kleiner und beträgt etwa 0,6 - 0,9 H5. Das Maß zwischen Fahrbahn und Boden 12 des tiefer gelegten Fahrerhauses 5 ist in der Zeichnung H1' angegeben. Im übrigen können die vorderen abgesenkten Längsträger-Abschnitte 2/3, 3/3 zur Bildung eines etwa V-förmigen Einbaubereiches für das Antriebsaggregat auch in sich von der Vertikalen abweichend schräg gestellt sowie zum direkten Anschluß von Achs- bzw. Einzelradaufhängungsorganen mit entsprechenden Aus- und Einbuchtungen versehen sein.

Die beiden Teile 2/1, 2/2 bzw. 3/1, 3/2 jedes Rahmen-Längsträgers 2, 3 sind mit größerem Abstand übereinander und in Längsrichtung im wesentlichen parallel verlaufend angeordnet. Außerdem ist dabei jedes der beiden Teile 2/1, 2/2 bzw. 3/1, 3/2 eines Rahmen-Längsträgers 2, 3 mit dem zugehörigen Gabel-Teil 10/1 bzw. 10/2 über Schraub- oder Nietverbindungen verbunden. Die jeweiligen Schnitt- bzw. Anschlußstellen sind in der Zeichnung mit 11 angezogen. Dies hat den Vorteil, daß das Fahrzeug in zwei Modulen vormontierbar ist, nämlich einem ersten Modul, bestehend aus Fahrgestell-Vorderteil, Antriebsaggregat 4 und Fahrerhaus 5, sowie einem zweiten Modul, bestehend aus Fahrgestell-Hinterteil mit Hinterachse(n) 12 und den üblichen in diesem Fahrzeugbereich angeordneten Komponenten bzw. Aggregaten.

Die beiden Teile 2/1, 2/2 bzw. 3/1, 3/2 jedes Rahmen-Längsträgers 2, 3 können am zugehörigen Gabel-Teil 9/1 bzw. 9/2 jedoch auch angeschweißt sein.

Das obere Teil 2/1, 3/1 jedes Rahmen-Längsträgers 2, 3 kann sich, wie beim Ausführungsbeispiel gemäß Fig. 1, über die Hinterachsanordnung 9 hinaus erstrecken. Das untere Längsträger-Teil 2/2, 3/3 endet dagegen jeweils vor der (ersten, vorderen) Hinterachse 9 und ist dort über einen Lagerschild 13, an dem Hinterachsaufhängungsorgane angelenkt sind, mit dem zugehörigen oberen Längsträger-Teil 2/1, 3/1 verbunden.

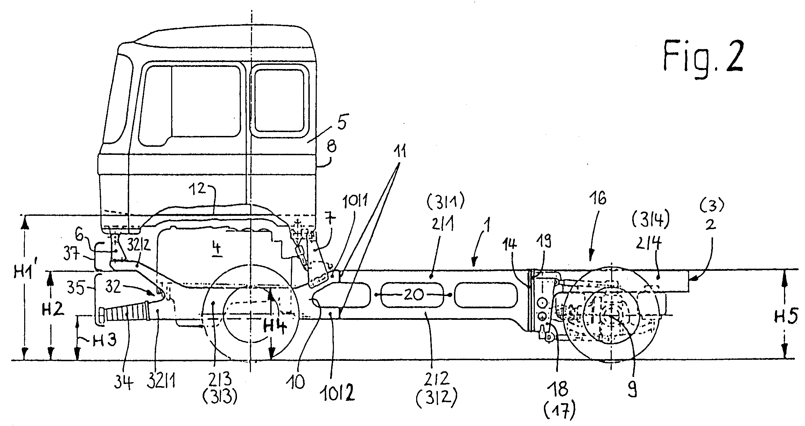

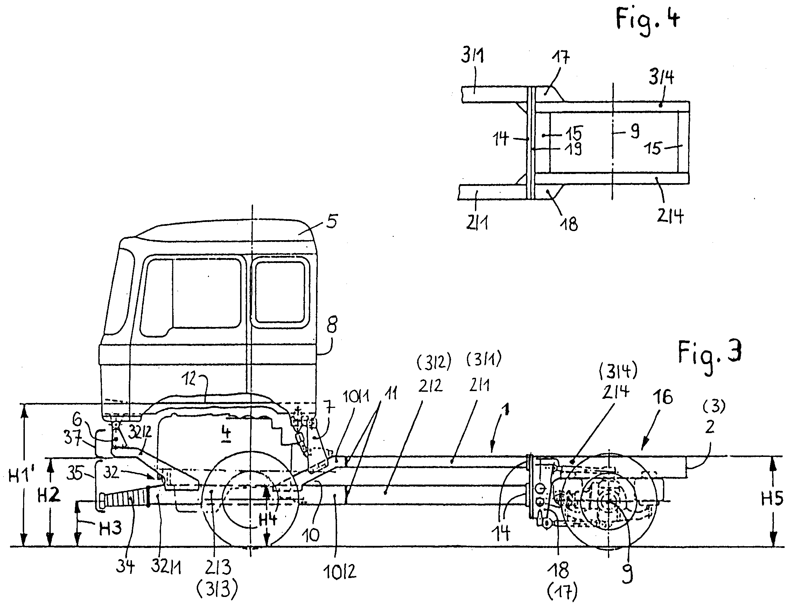

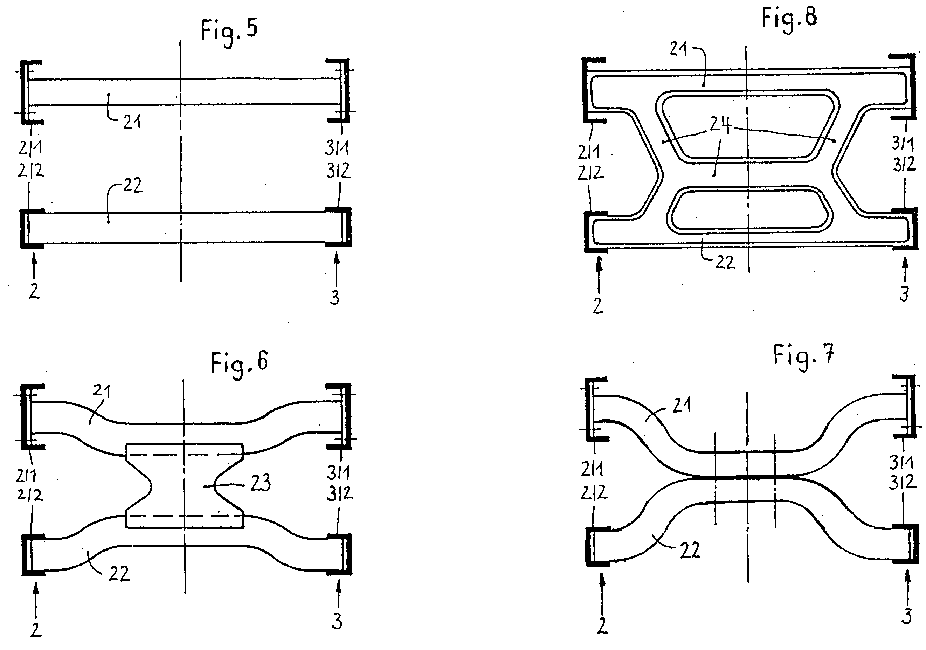

Alternativ hierzu können jedoch beide Teile 2/1, 2/2 bzw. 3/1, 3/2 jedes Rahmen-Längsträgers 2, 3 nach hinten auch nur bis vor die (erste, vordere) Hinterachse 9 reichen (siehe die Ausführungsbeispiele gemäß Fig. 2 und 3) und dort beispielsweise über eine Vertikal-Traverse 14 miteinander verbunden sein. In diesem Fall (siehe insbesondere Fig. 4) ist der Rahmen nach hinten durch sich an den oberen Längsträger-Teilen 2/1, 3/1 in deren Höhe anschließende, durch wenigstens einen Querträger 15 verbundene Längsträger-Teile 2/4 bzw. 3/4 ergänzt. Diese Ausführungsvariante macht es möglich, daß das Fahrgestell-Heck 16 als Modul, bestehend aus Rahmen-Endstück 2/4, 3/4, 15, und Hinterachse(n) 9 und sonstigen Anbauten vormontierbar und dann am davor gegebenen Fahrgestellabschnitt befestigbar ist. Für die Anlenkung von Hinterachsaufhängungsorganen sind dabei außen an den Längsträger-Teilen 2/4, 3/4 jeweils seitliche Lagerschilde 17, 18 vorgesehen. Frontseitig der letzteren und verbunden mit diesen ist beispielsweise eine Anschlußplatte 19 gegeben, die bei der Montage des vormontierten Fahrgestell-Hecks 16 an der Vertikaltraverse oder endseitig der Längsträger-Teile 2/1, 2/2, 3/1, 3/2 gegebenen Anschlußflanschen 14 zur Anlage kommt und dort befestigt wird.

Zur Erhöhung der Biegesteifigkeit können die beiden Teile 2/1, 2/2 bzw. 3/1, 3/2 der Rahmen-Längsträger 2, 3 in deren aufgelöstem Bereich auch noch durch wenigstens eine Strebe 20 miteinander verbunden sein, was beispielhaft in Fig. 2 dargestellt ist. In diesem Fall sind die beiden Teile 2/1, 2/2 bzw. 3/1, 3/2 zusammen mit den Streben 20 jeweils als einstückiges Blechpreßteil realisiert. Alternativ hierzu wäre jedoch eine Schweißkonstruktion aus einzeln vorgefertigten Teilen möglich.

In den Fällen gemäß Fig. 2 und 3 sind vom Ausführungsbeispiel gemäß Fig. 1 insofern abweichende Varianten dargestellt, als sich das untere Teil 2/2, 3/2 jedes Rahmen-Längsträgers 2, 3 mit ebener Unterkante in Verlängerung des vorderen, abgesenkten Längsträger-Abschnittes 2/3, 3/3 nach hinten bis vor die (erste, vordere) Hinterachse 9 erstreckt. Auch bei diesen Versionen der Längsträger-Teile-Anordnung erstreckt sich das jeweils obere Längsträger-Teil 2/1, 3/1 ebenso wie das untere Längsträger-Teil 2/2, 3/2 nur bis vor die (erste, vordere) Hinterachse 12 und ist dort mit letzterem über die Vertikaltraverse 14 verbunden.

Alternativ hierzu kann sich das obere Teil 2/1, 3/1 jedes Rahmen-Längsträgers 2, 3 wie im Fall gemäß Fig. 1 aber auch über die Hinterachsanordnung hinaus erstrecken und vor der (ersten, vorderen) Hinterachse 9 über den Lagerschild 13 mit dem zugehörigen unteren Längsträger-Teil 2/2, 3/2 verbunden sein.

Unabhängig von ihrer jeweiligen Anordnung können die beiden Teile 2/1, 2/2 bzw. 3/1, 3/2 jedes Rahmen-Längsträgers 2, 3 entweder einen gleichen Querschnitt oder unterschiedliche Querschnitte aufweisen, wobei das querschnittsstärkere wahlweise das untere oder obere sein kann.

Die beiden Längsträger 2, 3 sind generell über an geeigneten Stellen angebrachte Querträger miteinander verbunden. Die Fig. 5 bis 8 zeigen verschiedene Querträger-Konstruktionen für den Bereich der Zweiteilung der Längsträger 2, 3. Dabei können zur Verbindung der jeweils oberen Längsträger-Teile 2/1, 3/1 und unteren Längsträger-Teile 2/2, 3/2 gerade oder gekröpfte, gegebenenfalls endseitig mit Anschlußflanschen bestückte Querträger 21, 22 vorgesehen sein, die nicht (siehe Fig. 5) oder über ein Zwischenstück 23 (siehe Fig. 6) oder mittig aneinander anliegend (siehe Fig. 7) direkt miteinander verbunden sind und an denen die besagten Längsträger-Teile jeweils endseitig angeschraubt, angenietet oder angeschweißt sind. Bei der Ausführungsform gemäß Fig. 8 sind die Querträger 21, 22 zusammen mit diese verbindenden Verstrebungen 24 durch ein Blechpreßteil realisiert, an das die besagten Längsträger-Teile entweder angeschraubt, angenietet oder angeschweißt sind.

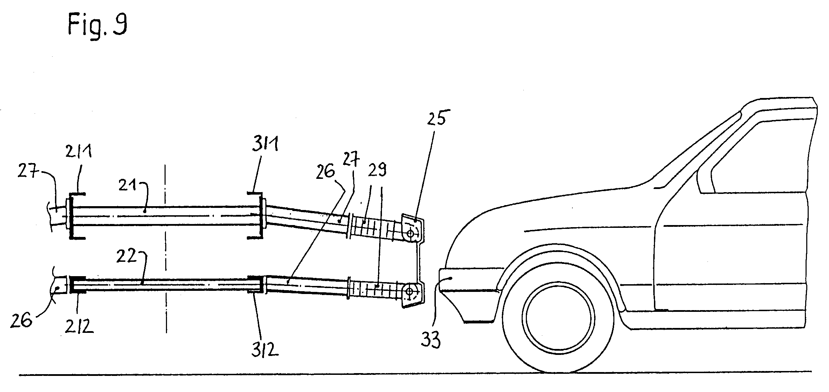

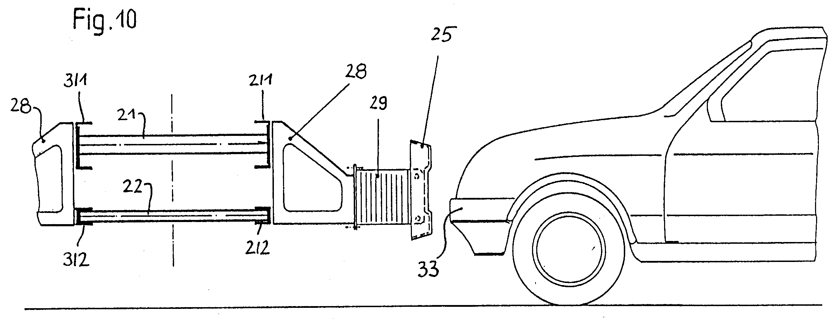

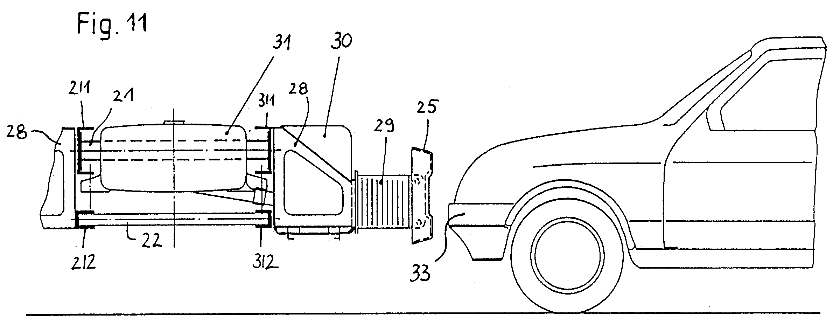

Die erfindungsgemäße Auflösung der beiden Rahmen-Längsträger 2, 3 in je zwei Teile 2/1, 2/2 bzw. 3/1, 3/2 eignet sich - in erfindungsgemäßer Ergänzung - hervorragend für eine äußerst günstige Anordnung und Abstützung von dem seitlichen Unterfahrschutz dienenden Organen. Verschiedene Ausführungsbeispiele hierzu sind in den Fig. 9 bis 11 dargestellt. Dabei sind an beiden Teilen 2/1, 2/2 bzw. 3/1, 3/2 der beiden Rahmen-Längsträger 2, 3 seitliche Unterfahrschutzschilde 25 tragende Halter 26, 27 (Fig. 9) bzw. 28 (Fig. 10, 11) angebracht. Die Halter 26, 27 sind im Fall gemäß Fig. 9 stabförmig ausgebildet und ragen seitlich von den sie tragenden Längsträger-Teilen 2/1, 3/1 bzw. 2/2, 3/2 ab. Bei der Ausführungsform gemäß Fig. 10 und 11 sind die Halter 28 durch einen geschlossenen Rahmen gebildet, der mit seiner Basis vertikal an beiden Teilen 2/1, 3/2 bzw. 3/1, 3/2 eines Längsträgers 2, 3 abgestützt und befestigt ist. Die Halter 26, 27, 28 können entweder zumindest teilweise selbst als Energieabsorber ausgebildet oder mit querwirkenden energieabsorbierenden Organen 29 bestückt sein. Dabei sind die Energieabsorber 29 zumindest teilweise in Höhe H3 einer Pkw-Stoßstange 33 angeordnet und vorzugsweise direkt an den Unterfahrschutzschilden 25 angeschlossen. Diese Unterfahrschutz-Konstruktionen machen es möglich, daß ein Seitenaufprall, z.B. eines Pkw, wie in den Fig. 9 bis 11 dargestellt, besonders günstig, weil energieverzehrend, abfangbar ist. Durch eine entsprechende Ausgestaltung der Halter 26, 27, 28 mit einer seitlich auskragenden Länge, die größer als ebenfalls seitlich an den Längsträger-Teilen 2/1, 2/2 befestigte Fahrzeugteile 30 wie Kraftstoff- und/oder Druckluftbehälter, Batteriekästen, Staukästen und dergleichen ist, sind letztere auch bei einem seitlichen Aufprall eines Personenkraftwagens relativ gut gegen etwaige Beschädigungen geschützt.

Im übrigen macht die Zweiteilung der beiden Längsträger 2, 3, wie ebenfalls aus Fig. 11 ersichtlich, auch eine besonders geschützte Unterbringung von Fahrzeugteilen 38 wie Batteriekästen, Kraftstoff- und/oder Druckluftbehältern und dergleichen im Bereich zwischen beiden zweigeteilten Längsträgern 2, 3 möglich.

Die Energieabsorber 29 können in Verbindung mit den Haltern 26, 27, 28 durch jede geeignete Vorrichtung, z.B. Zylinder/Kolben-Konstruktionen, oder durch frontseitig an festen Stäben angeordnetes energieabsorbierendes Material gebildet sein. Dabei kann auch dieses energieabsorbierende Material stabförmig sein, oder sich in Blockform, mehrere Halter miteinander verbindend, ausgebildet und am Unterfahrschutzschild 25 abgestützt angeschlossen sein. Vorzugsweise ist jeder der je Fahrzeugseite vorgesehenen Unterfahrschutzschilde 25 als großflächige, in sich profilierte und auch im Hinblick auf eine aerodynamische günstige Seitenverkleidung des Fahrzeugs ausgebildete Platte realisiert.

Unabhängig von der Gestaltung des Fahrgestells im hinteren Bereich kann jeder der Rahmen-Längsträger 2, 3 an seinem vorderen Endbereich eine Vertikal-Gabelung 32 aufweisen (siehe Fig. 1 bis 3), an deren unterem Gabel-Teil 32/1 vorne über einen oder mehrere in Höhe H3 einer Pkw-Stoßstange 33 angeordnete(n) Energieabsorber 34 ein Stoßfänger 35 abgestützt sein. Das obere Gabel-Teil 32/2 dagegen endet in einer etwas über dem Normal-Niveau einer Pkw-Motorhaube 36 gegebenen Höhe H2 und ist untenseitig so gestaltet, daß ein Pkw bei einer Frontalkollision in diese so gegebene, im übrigen bauteilfreie oder bauteilarme und dann nur mit längsweich (in Längsrichtung nachgiebig) am Rahmen befestigten Bauteilen bzw. Aggregaten ausgestattete Lastkraftwagen-Knautschzone eindringen kann, wobei durch den/die in Rahmen-Längsrichtung nachgiebigen Energieabsorber 34 die Energie verzehrbar ist.

## Patentansprüche

1. Lastkraftwagen, insbesondere der Frontlenker-Bauart, mit einem ein Antriebsaggregat und ein Fahrerhaus tragenden Fahrgestell, dessen Rahmen aus zwei über Querträger verbundenen Längsträgern besteht, an denen über Halterungen sich im Bereich vor der (ersten, vorderen) Hinterachse erstreckende seitliche Unterfahrschutzschilde befestigt sind, dadurch gekennzeichnet, daß jeder der beiden Rahmen-Längsträger (2, 3)
- etwa ab der Fahrerhaus-Rückwand (8) in ein oberes Längsträger-Teil (2/1, 3/1) und ein davon beabstandetes unteres Längsträger-Teil (2/2, 3/2) aufgelöst ist, und
- am hinteren Ende eines vorderen Längsträger-Abschnittes (2/3 bzw. 3/3) eine Vertikalgabelung (9) aufweist, an deren oberem Gabelteil (9/1) sich das obere Längsträger-Teil (2/1 bzw. 3/1) und an deren unterem Gabelteil (9/2) sich das untere Längsträger-Teil (2/2 bzw. 3/2) des aufgelösten Längsträger-Abschnittes anschließt,
daß ferner das untere Längsträger-Teil (2/2 bzw. 3/2) im aufgelösten Längsträger-Abschnitt nur bis vor die (erste, vordere) Hinterachse (12) reicht und dort über ein endseitiges Verbindungsorgan (13, 14) mit dem darüber angeordneten oberen Längsträger-Teil (2/1 bzw. 3/1) verbunden ist,
daß im aufgelösten Längsträger-Abschnitt an beiden Teilen (2/1, 2/2 bzw. 3/1, 3/2) eines Längsträgers (2, 3) jeweils die Halterungen (26, 27, 28) für die seitlichen Unterfahrschutzschilde (25) befestigt sind,
daß die seitlichen Unterfahrschutzschilde (25) über Energieabsorber (29) an den Haltern (26, 27, 28) sowie über diese an beiden Teilen (2/1, 2/2 bzw. 3/1, 3/2) eines Längsträgers (2, 3) abgestützt sind, und
daß im Raum zwischen den Unterfahrschutzschilden (25) und den sie tragenden Längsträger-Teilen (2/1, 2/2 bzw. 3/1, 3/2), zu diesen hingerückt und im Erstreckungsbereich der Halter (26, 27, 28) Fahrzeugteile (30), wie Kraftstoffund/oder Druckluftbehälter, Batteriekästen, Staukästen und dergleichen, geschützt außerhalb des im Crashfalle wirksamen Verformungsbereiches der Energieabsorber angeordnet sind.

2. Lastkraftwagen nach Anspruch 1, dadurch gekennzeichnet, daß die Vertikalgabelung (10) jeweils am hinteren Ende eines vorderen Längsträger-Abschnittes (2/3, 3/3) gegeben ist, welche Längsträger-Abschnitte zumindest partiell auf ein gegenüber dem Höhenniveau (H5) des oberen Längsträger-Teils (2/1, 3/1) niedrigeres Höhen-Niveau (H4) von ca. 0,6 - 0,9 H5 abgesenkt sind.

3. Lastkraftwagen nach Anspruch 1, dadurch gekennzeichnet, daß die beiden Teile (2/1, 2/2 bzw. 3/1, 3/2) jedes Rahmen-Längsträgers (2, 3) mit größerem Abstand übereinander und in Längsrichtung im wesentlichen parallel verlaufend angeordnet sind.

4. Lastkraftwagen nach Anspruch 1, dadurch gekennzeichnet, daß jedes der beiden Teile (2/1, 2/2 bzw. 3/1, 3/2) eines Rahmen-Längsträgers (2, 3) mit dem zugehörigem Gabel-Teil (10/1, 10/2) über Schraub- oder Nietverbindungen verbunden ist.

5. Lastkraftwagen nach einem oder mehreren der vorhergehenden Ansprüche, dadurch gekennzeichnet, daß sich beide Teile (2/1, 2/2; 3/1, 3/2) jedes Rahmen-Längsträgers (2, 3) nach hinten nur bis vor die (erste, vordere) Hinterachse (9) erstrecken und dort über ein Verbindungsorgan (14) miteinander verbunden sind, und daß der Rahmen (1) nach hinten durch sich in Höhe der oberen Längsträger-Teile (2/1, 3/1) anschließende, durch wenigstens eine Quertraverse (15) verbundene Längsträger-Teile (2/4, 3/4) vervollständigt ist.

6. Lastkraftwagen nach einem oder mehreren der Ansprüche 1 bis 4, dadurch gekennzeichnet, daß das obere Teil (2/1, 3/1) jedes Rahmen-Längsträgers (2, 3) sich über die Hinterachsanordnung (9) hinaus erstreckt, während das untere, jeweils vor der (ersten, vorderen) Hinterachse (9) endende Längsträger-Teil (2/2, 3/2) über einen Lagerschild (13), der zur Anlenkung von Hinterachsaufhängungsorganen dient, mit dem oberen Längsträger-Teil (2/1, 3/1) verbunden ist.

7. Lastkraftwagen nach einem oder mehreren der Ansprüche 1 bis 6, dadurch gekennzeichnet, daß die beiden Teile (2/1, 2/2 bzw. 3/1, 3/2) eines Rahmen-Längsträgers (2. 3) in dessen aufgelöstem Bereich auch noch durch wenigstens eine versteifende Strebe (20) miteinander verbunden sind.

8. Lastkraftwagen nach Anspruch 7, dadurch gekennzeichnet, daß die beiden Teile (2/1, 2/2 bzw. 3/1, 3/2) eines Rahmen-Längsträgers (2, 3) einschließlich der Strebe(n) (20) als einstückiges Blechpreßteil realisiert sind.

9. Lastkraftwagen nach Anspruch 2, dadurch gekennzeichnet, daß sich das untere Teil (2/2, 3/2) jedes Rahmen-Längsträgers (2, 3) mit ebener Unterkante in Verlängerung des vorderen, abgesenkten Längsträger-Abschnittes (2/3, 3/3) nach hinten bis vor die (erste, vordere) Hinterachse (9) erstreckt.

10. Lastkraftwagen nach einem oder mehreren der vorhergehenden Ansprüche, dadurch gekennzeichnet, die beiden Teile (2/1, 2/2; 3/1, 3/2) jedes Rahmen-Längsträgers (2, 3) entweder den gleichen Querschnitt oder unterschiedliche Querschnitte aufweisen.

11. Lastkraftwagen nach einem oder mehreren der vorhergehenden Ansprüche, dadurch gekennzeichnet, daß die seitlichen Unterfahrschutzschilde (25) jeweils durch obere, an den oberen Längsträger-Teilen (2/1, 3/1) befestigte, und untere, an den unteren Längsträger-Teilen (2/2, 3/2) abgestützte, seitlich abragende stabförmige Halter (26, 27), an denen außen die Energieabsorber (29) befestigt sind, getragen werden.

12. Lastkraftwagen nach einem oder mehreren der Ansprüche 1 bis 10, dadurch gekennzeichnet, daß die seitlichen Unterfahrschutzschilde (25) jeweils durch aus einem geschlossenen Rahmen gebildete, mit ihrer Basis vertikal an beiden Teilen (2/1, 2/2 bzw. 3/1, 3/2) eines Rahmen-Längsträgers (2, 3) abgestützte und befestigte Halter (28), an denen außen die Energieabsorber (29) befestigt sind, getragen werden.

13. Lastkraftwagen nach einem der Ansprüche 1 bis 10, dadurch gekennzeichnet, daß die seitlichen Unterfahrschutzschilde (25) von Haltern (26, 27, 28), die selbst teilweise als Energieabsorber ausgebildet sind, getragen werden, wobei die querwirkenden, energieabsorbierenden Organe (29) durch deren den Unterfahrschutzschilden (25) zugewandte Endbereiche gebildet sind.

14. Lastkraftwagen nach einem der Ansprüche 11 bis 13, dadurch gekennzeichnet, daß die Energieabsorber (29) zumindest teilweise in Höhe (H3) einer Pkw-Stoßstange (33) angeordnet sind.

15. Lastkraftwagen nach einem der Ansprüche 11 bis 14, dadurch gekennzeichnet, daß die Halter (26, 27, 28) bzw. deren nicht deformierbare Abschnitte eine seitlich auskragende Länge haben, die größer als die ebenfalls an den seitlichen Längsträger-Teilen (2/1, 2/2; 3/1, 3/2) befestigten Fahrzeugteile (30) ist.

16. Lastkraftwagen nach einem oder mehreren der vorhergehenden Ansprüche, dadurch gekennzeichnet, daß je Fahrzeug-Längsseite ein Unterfahrschutzschild (25) vorgesehen und dieser auch im Hinblick auf eine aerodynamisch günstige Seitenverkleidung des Fahrzeugs ausgebildet ist.

## Claims

1. A lorry, in particular of the tractor design, with a chassis supporting a drive unit and a driver's cab, the chassis frame comprising two longitudinal carriers connected via transverse carriers, and side chassis protection plates extending in the area upstream of the (first, front) rear axle are fastened to the longitudinal carriers by way of supports, characterised in that each of the two longitudinal carriers (2, 3) of the frame
― divides substantially from the rear wall (8) of the driver's cab to form an upper longitudinal carrier member (2/1, 3/1) and a lower longitudinal carrier member (2/2, 3/2) at a distance therefrom, and
― has a vertical forking (10) at the rear end of a front longitudinal carrier section (2/3 and 3/3 respectively), and the upper longitudinal carrier member (2/1 and 3/1 respectively) connects to the upper fork member (10/1) of the vertical forking, and the lower longitudinal carrier member (2/2 and 3/2 respectively) of the divided longitudinal carrier section connects to the lower fork member (10/2) of the vertical forking,
that, furthermore, the lower longitudinal carrier member (2/2 and 3/2 respectively) in the divided longitudinal carrier section only extends up to the (first, front) rear axle (9), where it is connected to the upper longitudinal carrier member (2/1 and 3/1 respectively) arranged thereabove via a connecting component (13, 14) at the end,
that, in the divided longitudinal carrier section, the respective supports (26, 27, 28) for the side chassis protection plates (25) are fastened to both members (2/1, 2/2 and 3/1, 3/2 respectively) of a longitudinal carrier (2, 3)
that the side chassis protection plates (25) are supported via energy absorbers (29) on the supports (26, 27, 28) and via the said supports on both members (2/1, 2/2 and 3/1, 3/2 respectively) of a longitudinal carrier (2, 3), and
that, in the space between the chassis protection plates (25) and the longitudinal carrier members (2/1, 2/2 and 3/1, 3/2 respectively) supporting the chassis protection plates, vehicle parts (30) such as fuel and/or compressed air containers, battery boxes, baffle boxes and the like, pushed towards the longitudinal carrier members and arranged in the extension range of the supports (26, 27, 28), are protected outside the deformation area of the energy absorber, which deformation area is effective in the event of a crash.

2. A lorry according to Claim 1, characterised in that the respective vertical forking (10) is provided at the rear end of a front longitudinal carrier section (2/3, 3/3), which longitudinal carriers fall at least partially to a height level (H4) lower in relation to the height level (H5) of the upper longitudinal carrier member (2/1, 3/1) and approximately 0.6 - 0.9 H5.

3. A lorry according to Claim 1, characterised in that the two members (2/1, 2/2 and 3/1, 3/2 respectively) of each longitudinal carrier (2, 3) of the frame are arranged at a relatively large distance above one another and extend substantially parallel in the longitudinal direction.

4. A lorry according to Claim 1, characterised in that each of the two members (2/1, 2/2 and 3/1, 3/2 respectively) of a longitudinal carrier (2, 3) of the frame is connected to the associated fork member (10/1, 10/2) by way of screw or rivet connections.

5. A lorry according to any one of the preceding claims, characterised in that both members (2/1, 2/2; 3/1, 3/2) of each longitudinal carrier (2, 3) of the frame extend rearwardly only up to the (first, front) rear axle (9) where they are connected to each other via a connecting component (14), and the frame (1) is completed at the rear by longitudinal carrier members (2/4, 3/4) attached at the level of the upper longitudinal carrier members (2/1, 3/1) and connected by at least one transverse beam (15).

6. A lorry according to any one of Claims 1 to 4, characterised in that the upper member (2/1 , 3/1) of each longitudinal carrier (2, 3) of the frame extends beyond the rear axle arrangement (9), whereas the respective lower longitudinal carrier member (2/2, 3/2) terminating upstream of the (first, front) rear axle (9) is connected to the upper longitudinal carrier member (2/1, 3/1) via a bearing plate (13) acting to articulate the rear axle suspension components.

7. A lorry according to any one of Claims 1 to 6, characterised in that the two members (2/1, 2/2 and 3/1, 3/2 respectively) of a longitudinal carrier of the frame (2. 3) are connected in the divided area thereof by at least one bracing strut (20).

8. A lorry according to Claim 7, characterised in that the two members (2/1, 2/2 and 3/1, 3/2 respectively) of a longitudinal carrier (2, 3) of the frame including the strut(s) (20) are produced in the form of an integral sheet metal stamping.

9. A lorry according to Claim 2, characterised in that the lower member (2/2, 3/2) of each longitudinal carrier (2, 3) of the frame with a flat lower surface extending the front, lowered longitudinal carrier section (2/3, 3/3) extends rearwardly up to the (first, front) rear axle (9).

10. A lorry according to any one of the preceding claims, characterised in that the two members (2/1, 2/2; 3/1, 3/2) of each longitudinal carrier (2, 3) of the frame have either the same cross-section or different cross-sections.

11. A lorry according to any one of the preceding claims, characterised in that the respective side chassis protection plates (25) are mounted on bar-shaped upper supports (27) projecting at the side and fastened to the upper longitudinal carrier members (2/1, 3/1) and on bar-shaped lower supports (26) projecting at the side and supported on the lower longitudinal carrier members (2/2, 3/2), and the energy absorbers (29) are fastened to the outside of the said supports.

12. A lorry according to any one of Claims 1 to 10, characterised in that the respective side chassis protection plates (25) are mounted on supports (28) fastened and supported with their base vertically on both members (2/1, 2/2 and 3/1, 3/2 respectively) of the longitudinal carrier (2, 3) of a frame, and formed from a closed frame, and the energy absorbers (29) are fastened to the outside of the said supports.

13. A lorry according to any one of Claims 1 to 10, characterised in that the side chassis protection plates (25) are mounted on supports (26, 27, 28) formed partially as energy absorbers, wherein the components (29) absorbing the energy and acting transversely are formed by the end regions of the said components facing the chassis protection plates (25).

14. A lorry according to any one of Claims 11 to 13, characterised in that the energy absorbers (29) are arranged at least partially at the level (H3) of a passenger vehicle bumper (33).

15. A lorry according to any one of Claims 11 to 14, characterised in that the side projecting length of the supports (26, 27, 28) i.e. the non-deformable sections thereof is larger than the length of the vehicle members (30) also fastened to the side longitudinal carrier parts (2/1, 2/2; 3/1, 3/2).

16. A lorry according to any one of the preceding claims, characterised in that one chassis protection plate (25) is provided for each longitudinal side of the vehicle, and is also formed with reference to an aerodynamically advantageous side panel of the vehicle.

## Revendications

1. Camion, en particulier à cabine avancée, dont le châssis porte un groupe propulseur et une cabine de conduite et comporte un cadre constitué de longerons reliés par des traverses porteuses et sur lesquels sont fixés par des supports des boucliers de protection de reprise en sous-oeuvre disposés latéralement dans la zone située devant l'essieu arrière situé le plus en avant,
ce camion présentant les caractéristiques suivantes :
- chacun des deux longerons (2, 3) est divisé, à partir sensiblement de la paroi arrière (8) de la cabine, en deux parties espacées, une partie supérieure (2/1, 3/1) et une partie inférieure (2/2, 3/2), tandis qu'à l'extrémité arrière d'une section avant (2/3, 3/3) du longeron 21/3, celui-ci présente une fourche verticale (9) dont la branche supérieure (9/1) est raccordée à la partie supérieure (2/1, 3/1) et dont la branche inférieure (9/2) est raccordée à la partie inférieure (2/2, 3/2) de la zone divisée en deux du longeron (2, 3),
- la partie inférieure (2/2, 3/2) du longeron s'étend seulement jusque devant l'essieu arrière (12) situé le plus en avant et, à cet endroit, est reliée par un organe terminal de liaison (13, 14) à la partie supérieure correspondante (2/1, 3/1) du longeron,
- dans la zone divisée en deux des longerons (2, 3) les supports (26, 27, 28) des boucliers (25) de protection de reprise en sous-oeuvre sont fixés sur les parties (2/1, 2/2 et 3/1, 3/2) des longerons (2, 3),
- les boucliers de protection (25) s'appuient par l'intermédiaire d'absorbeurs d'énergie (29) sur les supports (26, 27, 28) et également par l'intermédiaire de ceux-ci sur les parties (2/1, 2/2 ou 3/1, 3/2) d'un longeron (2 ou 3),
- dans l'espace existant entre les boucliers de protection (25) et les parties du longeron (2/1, 2/2 et 3/1, 3/2) qui les portent sont montés, près de ces longerons et dans la zone où se trouvent les supports (26, 27, 28), des éléments de véhicule (30) tels que des réservoirs de carburant et/ou d'air comprimé, des caissons de batteries, des réserves ou objets analogues, qui se trouvent à l'abri en dehors de la zone de déformateurs effective en cas de crash.

2. Camion selon la revendication 1,
caractérisé en ce que
chaque fourche verticale (10) se trouve à l'extrémité d'une section avant (2/3, 3/3) du longeron, ces sections étant abaissées, au moins partiellement, à un niveau égal à environ 0,6 - 0,9 fois le niveau (H5) des parties supérieures de longeron (2/1, 3/1).

3. Camion selon la revendication 1,
caractérisé en ce que
les deux parties (2/1, 2/2 et 3/1, 3/2) des longerons (2, 3) sont sensiblement parallèles en direction longitudinale et laissent entre elles un espace vertical assez important.

4. Camion selon la revendication 1,
caractérisé en ce que
les deux parties (2/1, 2/2 et 3/1, 3/2) des longerons (2, 3) sont reliées chacune par vis ou rivets à la partie associée (10/1, 10/2) de la fourche correspondante .

5. Camion selon une ou plusieurs des revendications précédentes ,
caractérisé en ce que
les deux parties (2/1, 2/2 ; 3/1, 3/2) des longerons (2, 3) s'étendent, vers l'arrière, seulement jusque devant l'essieu arrière (9) situé le plus en avant et, à cet endroit, sont reliées par un organe de liaison (14), le cadre (1) étant complété vers l'arrière par des parties des longerons (2/4, 3/4) raccordées à la hauteur des parties (2/1, 3/1) et reliées entre elles par au moins une traverse (15).

6. Camion selon une ou plusieurs des revendications précédentes,
caractérisé en ce que
la partie supérieure (2/1, 3/1) de chaque longeron (2, 3) s'étend au-dessus de l'ensemble (9) des essieux arrière, tandis que la partie inférieure de longeron (2/2, 3/2), se terminant devant l'essieu arrière (9) situé le plus en avant, est reliée à la partie supérieure du longeron (2/1, 3/1) par un flasque (13) sur lequel sont articulés les organes de suspension des essieux.

7. Camion selon une ou plusieurs des revendications 1 à 6,
caractérisé en ce que
les deux parties (2/1, 2/2 ou 3/1, 3/2) d'un longeron (2 ou 3) sont reliées entre elles, dans la zone de division des longerons, par au moins une barre de rigidification (20).

8. Camion selon la revendication 7,
caractérisé en ce que
les deux parties (2/1, 2/2 ou 3/1, 3/2) d'un longeron (2 ou 3) sont constituées chacune par une seule pièce de tôle emboutie, comprenant la (ou les) barre(s) (20).

9. Camion selon la revendication 2,
caractérisé en ce que
la partie inférieure (2/2, 3/2) du longeron (2, 3), avec son bord inférieur plan situé dans le prolongement de la section avant, abaissée (2/3, 3/3) du longeron s'étend à l'arrière jusque devant l'essieu arrière (9) situé le plus en avant.

10. Camion selon une ou plusieurs des revendications précédentes,
caractérisé en ce que
les deux parties (2/1, 2/2 ; 3/1, 3/2) de chaque longeron (2, 3) ont des sections identiques ou différentes.

11. Camion selon une ou plusieurs des revendications précédentes,
caractérisé en ce que
les boucliers latéraux (25) de protection de reprise en sous-oeuvre sont portés par des supports fixés aux parties supérieures de longeron (2/1, 3/1) et en appui sur les parties inférieures (2/2, 3/2), ces supports (26, 27) ayant la forme de barres dépassant latéralement et sur lesquelles sont fixés vers l'extérieur les absorbeurs d'énergie (29).

12. Camion selon une ou plusieurs des revendications 1 à 10,
caractérisé en ce que
chaque bouclier latéral de protection (25) est constitué par un support (28) ayant la forme d'un cadre fermé, en appui et fixé par sa base verticale sur les deux parties (2/1, 2/2 ou 3/1, 3/2) d'un longeron (2 ou 3), les absorbeurs d'énergie (29) étant fixés sur ces supports vers l'extérieur.

13. Camion selon une des revendications 1 à 10,
caractérisé en ce que
les boucliers latéraux de protection (25) sont montés sur des supports (26, 27, 28) constitués eux-mêmes en partie comme des absorbeurs d'énergie, les organes (29) absorbeurs d'énergie, à action transversale, étant formés par les extrémités de ces supports situées près des boucliers (25).

14. Camion selon une des revendications 11 à 13,
caractérisé en ce que
les absorbeurs d'énergie (29) sont, au moins en partie, situés à la hauteur (43) d'un pare-chocs (33) d'une automobile de tourisme.

15. Camion selon une des revendications 11 à 14,
caractérisé en ce que
les supports (26, 27, 28) ou leurs parties non déformables débordent latéralement d'une longueur dépassant celle des parties de véhicule (30) éventuellement fixées sur les côtés des longerons (2/1, 2/2 ; 3/1, 3/2).

16. Camion selon une ou plusieurs des revendications précédentes,
caractérisé en ce que
chaque côté du véhicule est équipé d'un bouclier latéral (25) de protection de reprise en sous-oeuvre constitué de manière à former un revêtement latéral aérodynamiquement favorable.
